# EUROPEAN PATENT APPLICATION

(11) **EP 2 568 661 A1**
(43) Date of publication of application: **13.03.2013**
(21) Application number: 11179730.4
(22) Date of filing: 01.09.2011
(51) Int. Cl.: H04L 12/24, H04L 12/70

(54) **Tiered network service based on controllably dropping packets**

(71) Applicant: Koninklijke KPN N.V., 2516 CK The Hague (NL)
(72) Inventor: Steenbergen, van, Ate, 9737 NN Groningen (NL)
(74) Representative: Wuyts, Koenraad Maria

(57) **Abstract**

A tiered service plan differentiates between subscribers to service packages that include one or more time-critical applications, and other subscribers to other service packages that include only one or more time-uncritical applications. The tiered service plan is based on subjecting a sequence of data packets, addressed to, or sent by, the other subscribers, to removal operations. In each specific removal operation, a specific series of consecutive data packets is removed from the sequence. The remaining data packets form a modified sequence. The remaining data packets are then forwarded to their destinations. The removal of data packets in bursts will create distortions and artifacts during the rendering of the payload of the remaining data packets in time-critical applications. Time-uncritical applications are not affected as these typically use a data communication protocol with an error-control mechanism that involves retransmission of data packets lost.

## Description

### FIELD OF THE INVENTION

The invention relates to a method of controlling a quality of a service on a data network. The invention also relates to data network equipment configured for executing the method, and for control software for installation on data network equipment to configure the data network equipment for executing the method.

### BACKGROUND ART

Data communication service providers may use data packet analysis, such as deep packet inspection (DPI), as a means to implement tiered service plans, in order to differentiate between different service packages offered to their subscribers. By means of offering different service packages, the individual subscriber can choose a specific one of the service packages, based on the fee structure and on the individual subscriber's needs. The data packet analysis is then used to enforce the policy associated with the selected service package by allowing the subscriber access to the services and applications covered by the service package subscribed to, and by barring the subscriber from accessing services or applications not covered by the package.

Data packet analysis, e.g., DPI, is a technology well known in the art. In DPI, both the data part (payload part) and the header of an individual data packet are examined when the data packet passes an inspection point.

The examining includes, for example, determining whether the data packet is involved in a high-quality application or a low-quality application. A data packet from a high-quality application is then processed with priority over another data packet from a low-quality application in order to guarantee a high-quality service to the end-user of the high-quality application. For example, quality of service (QoS) mechanisms on a data network enable network devices, such as gateways, switches and routers, to apply policies to the different types of data traffic in order to ensure that each type of data traffic is treated in the most appropriate way. Voice traffic in a Voice-over-IP application (VoIP), for example, typically receives high priority because it is very sensitive to delay. Data traffic, such as web browsing or email, has more relaxed timing constraints and, therefore, does not need the same preferential treatment.

As another example, the examining includes determining whether the data packet complies with certain predefined criterions in order to decide whether the data packet can pass or, alternatively, needs to be routed to a destination different than the one indicated in the header of the data packet. A data packet on the Internet is formatted according to the Internet Protocol (IP) stack and has multiple headers: an IP header, a Transmission Control Protocol (TCP) header or a User datagram Protocol (UDP) header, etc. Network equipment only needs the IP header for the normal routing.

### SUMMARY OF THE INVENTION

Data packet analysis needs dedicated equipment, may contribute to the overall latency in the delivery of the data packets across the data network, and has also raised privacy issues with the users who send or receive data packets via the Internet. Accordingly, data packet analysis is not an attractive manner to implement a tiered service plan and to differentiate between service packages.

The inventor proposes an alternative manner for differentiating between service packages. Instead of conducting data packet analysis, the inventor proposes to control instead the quality of service provided to a user of a data communication device involved in a session of data communication conducted via a data network. In the invention, the differentiating between service packages is based on distinguishing between services or applications, wherein the data communication, i.e., the delivery of data packets, is time-critical, and other services or applications, wherein the delivery of data packets is not time-critical (or: time-uncritical). The expression "time-critical", as used herein, refers to the dependence of the perceived quality of the service or application on a timely delivery of a data packet with respect to the delivery of other data packets in the same service or application. A time-critical service or application may therefore be regarded as a real-time service or application, wherein the rendering of the payload of the data packets takes place substantially entirely within the time span of the delivery, and at substantially the same rate. Accordingly, the time-criticality of a service or application puts temporal constraints on the delivery of the data packets.

Examples of time-critical services or applications are: audio streaming, video streaming, VoIP- telephony, gaming over the Internet, Internet Protocol television (IPTV), online trading or online investing, etc. Examples of services or applications that are time-uncritical are: downloading a file over the Internet, sending or receiving an email or an SMS, browsing the world-wide-web, etc.

Within this context, reference is made to "IPTV QoE: Understanding and interpreting MDI values", White Paper, Agilent Technologies, 2008, wherein the relationship between jitter and buffering is explained. Jitter is a change in end-to-end latency with respect to time. Data packets arriving at a destination at a constant rate exhibit zero jitter. Data packets with an irregular arrival rate exhibit non-zero jitter. After traversing the data network between the origin of the data packets and the destination of the data packets, and after being queued, routed and switched by the various intervening network elements, data packets are liable to arrive at the destination with some rate variation over time. This can, for example, be caused by transient network congestion due to a large amount peer-to-peer (P2P) traffic, dynamic subscriber actions such as placing a VoIP call that preempts the video traffic, or to data packets taking different paths through the data network. In any event, if the instantaneous arrival rate of the data packets does not match the rate at which the destination is consuming data packets, the data packets must be buffered at the destination upon arrival.

The more severe the jitter, the larger the buffers need to be in order to eliminate the effects of the jitter. However, a buffer introduces delay. Furthermore, buffers are of a finite size, and excessive jitter will cause them to either overflow or underflow. An overflow occurs when data packets are arriving at such a high rate that they fill the buffer, which eventually causes data packets to be dropped at the destination. An underflow occurs when data packets are arriving at such a low rate that the buffer does not have enough data to feed the decoder at its drain rate. Both an overflow and an underflow are undesirable as they degrade the user's quality of experience.

Below are discussed some examples of time-critical applications, and an order of magnitude of acceptable jitter per such example.

Consider VoIP. VoIP may be regarded as a software application running on a TCP/IP stack (that includes UDP and RTP control software) of a VoIP-enabled data processing device. As VoIP technology is well known, the signaling protocols and signaling operations for setting up a communication channel across a data network are not discussed here. Instead, the transmission of packetized voice is being considered below.

A VoIP data packet is made up of a payload and of packet headers. The payload comprises voice samples produced by a codec. A codec is configured for converting an analog voice signal to a digitally encoded version. The size of the payload depends on the type of codec used. For example, a G.711 codec can produce each time 160 Bytes of voice samples, corresponding to a length of 20 msec of speech, or 240 Bytes of voice samples, corresponding to a length of 30 msec of speech. As another example, a G.729 codec can produce each time 20 Bytes of voice samples, corresponding to a length of 20 msec of speech, or 30 Bytes of voice samples that correspond to a length of 30 msec of speech. The payload of a VoIP data packet is encapsulated in an RTP packet. The acronym "RTP" stands for "Real-Time Transport Protocol", which is a standardized packet format for delivering audio and video over a data network, e.g., the Internet, that uses the Internet Protocol Suite. RTP is extensively used for streaming media, among which are telephony applications. The RTP packet has an RTP packet header of 12 Bytes. The RTP packet is, in turn, encapsulated in an UDP packet. The UDP packet has a UDP packet header of 8 bytes. And the UDP packet is, in turn, encapsulated in an IP packet with an IP packet header of 20 bytes. The RTP packet header, the UDP packet header and the IP packet header combined have a length of 40 bytes. Optionally, the combined IP/UDP/RTP header can be compressed to 2 bytes or 4 bytes using Compressed Real-Time Transport Protocol (cRTP). However, as cRTP compresses VoIP data on a link-by-link basis, both ends of the IP link need to be configured for cRTP, which is not always possible. See, e.g., the memoranda RFC 2508 and RFC 3545 published by the Internet Engineering Task Force.

As known, TCP uses an error-control mechanism that is based on acknowledgements, retransmissions of lost or damaged data packets, and time-outs. An acknowledgement is a message sent by the receiver to the origin of the data packets to explicitly acknowledge correct receipt of a data packet. A time-out is a period of time of a predetermined length that is allowed to elapse before an acknowledgment is to be received. The receiver will not send an acknowledgement if data packets have been lost. Upon elapse of the time-out, the origin of the data packets retransmits the data packets for which the acknowledgement was not received within the time-out. VoIP telephony typically uses UDP instead of TCP, because recovering from congestion through retransmission usually entails too much latency. UDP does not have sequence numbering in the header as does TCP, and does not use the above error-control mechanism. The data packets in the VoIP application are rendered in the order of their arrival. Clearly, packet loss will result in distortion of the rendered speech.

The VoIP software application of the receiving party may run an algorithm for packet loss concealment (PLC) in order to mask the effects of lost or discarded VoIP data packets. The implementation of the PLC algorithm depends on the type of VoIP codec used. As known, a VoIP codec is configured for converting an analog voice signal to a digitally encoded version. It is recommended that an average value of jitter be targeted at less than 30 ms. See, e.g., "End-to-End QoS Network Design: Quality of Service in LANs, WANs, and VPNs", Tim Szigeti, Christina Hattingh, Cisco Press 2004, Chapter 2 "Quality of Service Design Overview", section "QoS Requirements of VoIP". It is recommended that jitter in a VoIP data communication between the two end-points of the VoIP data communication be less than 100 msec. That is, a delay with a variability of, say, 100 ms or higher is generally unacceptable in the delivery of data packets in a sequence of data packets that includes data packets from a VoIP data communication.

As to real-time gaming over the Internet: if a data packet is not timely delivered in a video game being played over the Internet, a player will not be able to respond in time to the actions of others players or his/her response to a change in the status of the game will not affect in time the status of the game as perceived by the other players. In effect, a delayed delivery of data packets to a player seriously hampers participating in the game, and degrades the quality of the video and audio of the game. Delays in the order of 100ms or lower may be acceptable within some specific games. See, e.g., "On the Impact of Delay on Real-Time Multiplayer Games"; L. Pantel and L. Wolf; NOSSDAV 2002 Proceedings of the 12th international workshop on Network and operating systems support for digital audio and video; ACM; New York, USA, 2002, pp 23-29. However, in some popular multi-player games played over the Internet, any delay may add to the risk of the user's avatar being neutralized by an adversary before the user will even notice his/her avatar is doomed. Therefore, a delay with a variability of, say, 100 ms or higher is generally unacceptable in the delivery of data packets in a sequence of data packets that includes data packets from a real-time game played over the Internet.

In streaming of a video, each individual data packet in a sequence of data packets of the video carries an individual ranking stamp for restoring the order of the data packets upon receipt. For example, the TCP header of each specific data packet in a sequence of data packets sent under TCP includes a sequence number indicative of the order of the specific data packet in the sequence relative to the other data packets of the sequence. If a particular data packet in the sequence is not delivered in time with respect to the preceding data packets already delivered, or is not delivered in the proper order, the receiving software application has to stall until the particular data packet arrives and registers a packet loss after a certain time-out. Regardless of whether or not the particular data packet gets retransmitted by the origin and arrives out-of-order, the processing of the delivered data packets may introduce artifacts in the rendering. The artifacts, if small enough, may go unnoticed by the user or may be masked by additional data processing. According to "IPTV QoE: Understanding and interpreting MDI values", White Paper, Agilent Technologies, 2008, mentioned above, it is recommended that the maximum value of the jitter introduced by a data network be 9ms - 50 ms in a video streaming application, depending on the type of receiver, e.g., a set-top box (STB), being used at the destination. A delay with a variability of, say, 50 ms or higher is generally unacceptable in the delivery of data packets in a sequence of data packets that includes data packets of a streamed video.

Accordingly, the time-critical character of a service or application puts temporal constraints on the delivery of the data packets, sent from the transmitter (source, origin) via the data network to the receiver (destination). The constraints have been described above in terms of limiting the jitter (i.e., the variability of the network delay) in order to achieve an acceptable quality of service as perceived by the end-user. It is therefore recommended in a time-critical service or application, that the magnitude of the jitter be maintained below a certain threshold. If the jitter assumes a magnitude greater than the recommended threshold, distortions or artifacts are created when the payload of the data packets gets rendered at the receiver. If distortions and artifacts occur at a rate high enough, the quality of the service or application as perceived by the end-user becomes unacceptable, or the service or application is even rendered useless to the end-user. In contrast, the perceived quality of a time-uncritical service or application is not affected, if the delay between the delivery of data packets, on the one hand, and the rendering of the payload of the delivered data packets, on the other hand, is subjected to jitter with a magnitude in the order of a second (e.g., for web browsing) or in the order of a few seconds (e.g., for downloading a file) or in the order of minutes or hours (e.g., in an email data communication).

The extreme of the magnitude of the jitter is represented by a scenario, wherein some of the data packets transmitted do not arrive at all at the destination, i.e., a scenario wherein some of the data packets have been dropped somewhere on the data network between the transmitter and the receiver. If enough data packets are lost in bursts, and the bursts occur often enough, the time-critical services and applications are rendered totally ineffective. On the other hand, the quality of a time-uncritical service or application, as perceived by the end-user, need not be affected at all if the time-uncritical service or application uses a data communication protocol with an error-control mechanism that involves retransmission of lost data packets, as in TCP discussed above.

The inventor proposes a method of controlling a quality of a service on a data network. The method comprises receiving a plurality of data packets in a sequence. The plurality of data packets comprises at least one of a first plurality of first data packets and a second plurality of second data packets. Respective ones of the first plurality of first data packets are addressed to respective ones of multiple specific destinations, and respective ones of the second plurality of second data packets have been received from respective ones of multiple specific sources. The method comprises modifying the sequence to produce a modified sequence. The modifying comprises at least one of removing from the sequence one or more specific series of one or more consecutive ones of the first data packets, and removing from the sequence one or more further specific series of one or more consecutive ones of the second data packets. The method further comprises supplying the modified sequence.

The method of the invention is implemented as follows. Each respective one of the specific destinations is a data communication device of a respective user, who is not authorized to use time-critical services or applications. Likewise, each respective one of the specific sources is a data communication device of a respective user, who is not authorized to use time-critical services or applications. The first plurality of first data packets may include data packets that stem from one or more time-critical applications and other data packets that stem from one or more time-uncritical applications. Likewise, the second plurality of second data packets may include data packets that stem from one or more time-critical applications and other data packets that stem from one or more time-uncritical applications. The removal of a specific series of consecutive first or second data packets gives rise to a disturbing artifact in the rendering of the payload of particular ones of the remaining first or second data packets in a particular time-critical application. The rate at which successive series of consecutive first or second data packets are being removed from the sequence is the rate, at which artifacts are created during the rendering of the payload of the particular remaining first or second data packets in the modified sequence that belong to the particular time-critical application. The rate can be chosen high enough to degrade the quality of the application for this particular time-critical application to an unacceptably low level.

The removal of a specific series of consecutive first or second data packets need not generate a disturbing artifact in the rendering of the payload of the other remaining first or second data packets in a time-uncritical application. As explained above, a typical time-uncritical application uses a data communication protocol, such as TCP, that has an error-control mechanism based on retransmission of data packets that are considered lost. Consider the repeated controlled removal of data packets from a sequence of data packets according to the invention. If a specific data packet is removed during a particular cycle of removal operations according to the invention, and if the specific data packet was sent in a time-uncritical application, the specific data packet will be retransmitted by the sender upon a time-out of an acknowledgment from the intended receiver. The probability, that the retransmitted specific data packet will be removed again in a next removal cycle according to the invention, is considered negligible under practical circumstances, in view of the fluctuations in the dynamics of the communication network in operational use. Accordingly, repeatedly removing series of consecutive first or second data packets from the sequence in bursts does not affect the quality of a time-uncritical application.

Applying a method according to the invention enables to implement a tiered service plan based on differentiating between subscribers, who have subscribed to service packages that include one or more time-critical applications, and other subscribers, who have subscribed to service packages that are limited to only one or more time-uncritical applications.

The invention covers a first scenario, wherein a user of the data communication device is authorized, via his/her subscription, to only receive data packets in a time-critical application and not to send data packets in a time-critical application. In the first scenario, the data packets, whose destination is the data communication device, are not subjected to the method of the invention, whereas the data packets, whose origin is the data communication device, are subjected to the method of the invention.

The invention also covers a second scenario, wherein the user of the data communication device is authorized, via his/her subscription, to only send data packets in a time-critical application and not to receive data packets in a time-critical application. In the second scenario, the data packets, whose origin is the data communication device, are not subjected to the method of the invention, whereas the data packets, whose destination is the data communication device, are subjected to the method of the invention.

The invention also covers a third scenario wherein the user of the data communication device is authorized, via his/her subscription, neither to send nor to receive data packets in a time-critical application. In the third scenario, the data packets, whose destination or origin is the data communication device, are subjected to the method of the invention.

Summarizing, the method may be applied only to data packets sent by specific subscribers and not to data packets addressed to these specific subscribers (first scenario); or the method may be applied only to data packets addressed to specific subscribers and not to data packets sent by these specific subscribers (second scenario); or the method may be applied to data packets sent by specific subscribers, as well as to data packets addressed to these specific subscribers (third scenario).

The method of the invention is carried out, for example, in an access network of an access service provider. The access network serves the subscribers to service packages in the tiered service plan of the access service provider. The access network connects data communication equipment, of the subscribers to the Internet and to each other. The method of the invention is applied to data packets that have as the origin or as the destination a data communication device, whose user has subscribed to a service package that only includes one or more applications that are time-uncritical. The access network then differentiates between, on the one hand, data packets of which the origin or the destination is a data communication device of a subscriber to a service package that only includes one or more time-uncritical applications and, on the other hand, data packets communicated between data communication devices, other than those of subscribers to only time-uncritical services. The method is not applied to data packets that are communicated between data communication devices of subscribers to service packages that include one or more time-critical applications. Likewise, the method is not applied to data packets that are communicated between a data communication device of a subscriber to a time-critical application and another data communication device of a user that has subscribed to the services of another access service provider.

The access network differentiates between the data packets to, or from, data processing equipment of subscribers to only time-uncritical applications, and other data packets. The access network may accomplish this in a variety of manners. For example, the access network may inspect the origin and destination per individual data packet received at the access network, and route the data packets either via a first sub-network or a second sub-network. The flow (sequence) of data packets through the first sub-network is subjected to the method of the invention, whereas the flow (sequence) of data packets through the second-sub-network is not subjected to the method of the invention. Alternatively, the data communicating equipment of subscribers to only time-uncritical applications is configured to connect to the first sub-network of the access network, and the data communication equipment of the other subscribers is configured to connect to the second sub-network.

The invention also relates to data network equipment configured for controlling a quality of a service on a data network. The data network equipment comprises an input for receiving a plurality of data packets in a sequence. The plurality of data packets comprises at least one of a first plurality of first data packets and a second plurality of second data packets. Respective ones of the first plurality of first data packets are addressed to respective ones of multiple specific destinations, and respective ones of the second plurality of second data packets have been received from respective ones of multiple specific sources. The data network equipment comprises a modifier that is operative to modify the sequence so as to produce a modified sequence. The modifier is configured for at least one of removing from the sequence one or more specific series of one or more consecutive ones of the first data packets, and for removing from the sequence one or more further specific series of one or more consecutive ones of the second data packets. The data network equipment comprises an output for supplying the modified sequence.

Examples of such data network equipment are a server, a router or a gateway, a session border controller, a Home Location Register (HLR), etc. As known, a session border controller is a controller used in a VoIP network for exerting control over the signaling, i.e., over the use of signals for controlling communications, and over the media streams involved in setting up, conducting and tearing down telephone calls and other interactive media communications. As known, the HLR is a central database that contains details of each subscriber to a mobile telephone service who is authorized to use the GSM core network.

The invention also relates to control software, e.g., provided on a computer-readable medium, such as an optical disk or a solid-state memory, or made accessible as a downloadable file from a software provider, etc. The control software is configured to control data network equipment for controlling a quality of a service on a data network. The data network equipment comprises an input for receiving a plurality of data packets in a sequence. The plurality of data packets comprises at least one of a first plurality of first data packets and a second plurality of second data packets. Respective ones of the first plurality of first data packets are addressed to respective ones of multiple specific destinations, and respective ones of the second plurality of second data packets have been received from respective ones of multiple specific sources. The control software comprises instructions for modifying the sequence to produce a modified sequence. The instructions comprise at least at least one of first instructions and second instructions. The first instructions are configured for removing from the sequence one or more specific series of one or more consecutive ones of the first data packets. The second instructions are configured for removing from the sequence one or more further specific series of one or more consecutive ones of the second data packets. The instructions further comprise third instructions for supplying the modified sequence at an output of the data network equipment.

### BRIEF DESCRIPTION OF THE DRAWING

The invention is explained in further detail, by way of example and with reference to the accompanying drawing, wherein:
Fig.1 is a block diagram of a first embodiment of a system in the invention;
Fig.2 is a diagram illustrating operations in an embodiment of a method in the invention; and
Fig.3 is a diagram of a second embodiment of a system according to the invention.

Throughout the Figures, similar or corresponding features are indicated by same reference numerals.

### DETAILED EMBODIMENTS

The invention enables to implement a tiered service plan that differentiates between subscribers to service packages that include one or more time-critical applications, and other subscribers to other service packages that include only one or more time-uncritical applications. The tiered service plan is based on subjecting a sequence of data packets, which are addressed to, or sent by, the other subscribers to cycles of removal operations. In each specific removal operation, a specific series of consecutive data packets is removed from the sequence. The remaining data packets form a modified sequence. The remaining data packets of the modified sequence are then forwarded to their destinations. The removal of data packets in bursts will create distortions and artifacts during the rendering of the payload of the remaining data packets in time-critical applications. In practice, time-uncritical applications are not affected by the removal of data packets in bursts. Time-uncritical applications typically use a data communication protocol with an error-control mechanism that involves retransmission of data packets lost. As mentioned earlier, the probability that a retransmitted data packet will be removed again in a subsequent removal cycle is considered negligible, in view of the time-scales of the fluctuations in the dynamics of the communication network in operational use.

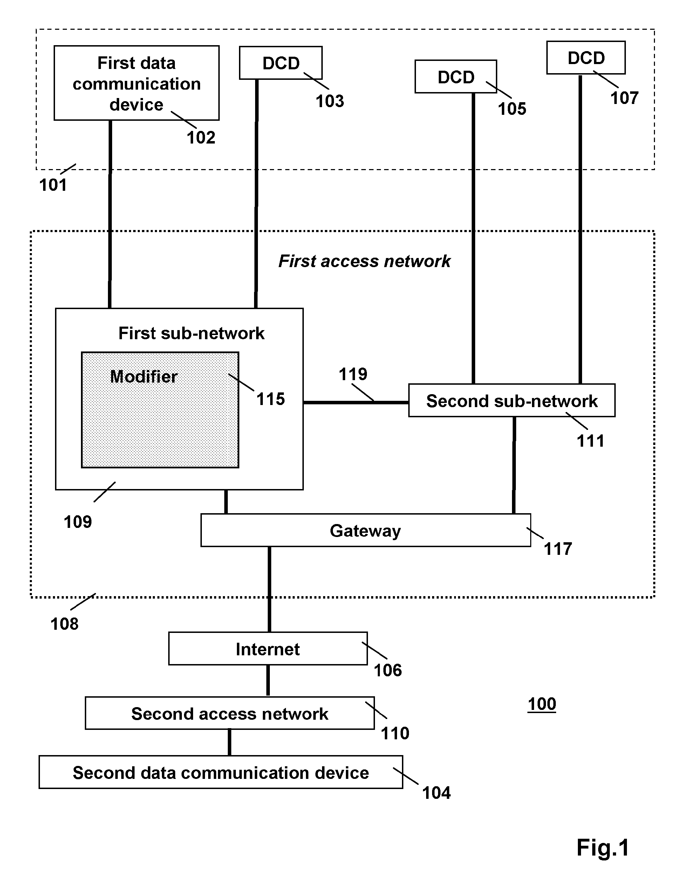

Fig.1 is a diagram of a first embodiment 100 of a system in the invention. The first embodiment 100 comprises a first data communication device 102, a second data communication device 104, a data network 106 such as the Internet, a first access network 108 to connect the first data communication device 102 to the Internet 106, and a second access network 110 to connect the second data communication device 104 to the Internet 106. The Internet 106, the first access network 108 and the second access network 110 enable the first data communication device 102 and the second data communication device 104 to communicate data to each other.

Any of the first data communication device 102 and the second data communication device 104 comprises, e.g., a mobile telephone, a smartphone, a media telephone phone, a VoIP telephone, a gaming console, a network-enabled personal computer at home, a wireless mobile computer, etc.

The first access network 108 is controlled by a first service provider. The second access network 110 is controlled by a second service provider. The first service provider and the second service provider may, but need not, be the same service provider. Such a service provider is, for example, an Internet Service Provider (ISP), a telecommunications service provider, e.g., the operator of public switched telephone network (PSTN) including a mobile telephone network and/or a landline telephone network, etc. The first access network 108 of the first service provider serves a community 101 of data communication devices, including the first data communication device 102, a third data communication device 103, a fourth data communication device 105 and a fifth data communication device 107.

Instead of a "one-size-fits-all" service package, the first service provider has implemented a tiered service plan, wherein an individual service package is tailored to the needs of an individual subscriber. In a tiered service plan, a person can select a specific one of multiple service packages and subscribe to that specific service package for a specific fee. A tiered service plan makes it possible for the individual subscriber to adjust the costs of the subscription to what he/she actually uses, instead of also having to pay for services he/she does not plan to use. A subscriber will in general consider a tiered service approach as fair. One generally does not want to pay for something one has not asked for and does not need, and one generally does not want to share the costs of the services delivered only to others.

The tiered service plan of the first service provider differentiates between *time-critical* applications and *time-uncritical* applications. Examples of a time-critical application are Voice-over-IP (VoIP) telephony, videoconferencing, audio streaming or video streaming, IPTV, multi-player gaming over the Internet, online trading or online investing, etc. Examples of a time-uncritical application are downloading a file, browsing the world-wide-web, email. The first service provider offers one or more standard service packages and one or more enhanced service packages. A particular one of the standard service packages includes only one or more particular time-uncritical applications. A particular one of the enhanced service packages includes one or more particular time-critical applications, or includes a particular standard service package as well as one or more particular time-critical applications.

Assume that the user of the first data communication device 102 has subscribed to a specific standard service package. That is, the specific service package subscribed to by the user of the first data communication device 102 does not cover a time-critical application. The user of the first data communication device 102 may install application software, e.g., a VoIP codec, at the first data communication device 102 in order to be able to configure the first data communication device 102 for a time-critical application, e.g., VoIP telephony. However, the user of the first data communication device 102 has not subscribed to, and therefore has not paid for, a service package that includes a time-critical application. In order to maintain a fair tiered service plan, the first service provider is therefore compelled to prevent the user of the first data communication device 102 from using a data communication service for which this user has not paid.

Consider now a flow of data packets being communicated to, or from, the first data communication device 102. In order to determine which ones of the data packets stem from a time-critical application and which other ones of the data packets stem from a time-uncritical application, the first service provider could use Deep Packet Inspection (DPI). DPI is well known in the art. DPI is rather costly for the service provider as DPI requires the employment of dedicated equipment. Moreover, DPI also introduces extra delays resulting from subjecting the data packets to DPI in order to determine whether or not to forward the data packets. DPI may also raise privacy issues with the subscribers, as DPI can, but need not, be used to inspect the actual payload of the data packets.

The inventor now proposes an alternative approach in order to differentiate between time-uncritical applications and time-critical application. The alternative approach uses the selective and deliberate dropping of consecutive data packets in bursts from a sequence of data packets. The dropping of data packets in a burst will cause distortions or artifacts when the payload of the remaining data packets is rendered in a time-critical application at the receiver. If bursts occur at a high enough rate, the rendering will become useless to the end-user. In time-uncritical applications, the dropping of data packets will have less severe consequences. Time-uncritical applications typically use a data communication protocol, such as TCP, that includes an error-control mechanism for the retransmission of data packets that have been lost.

In order to implement this alternative approach, the first service provider proceeds in the first embodiment 100 as is described below. It is assumed that the users of the first data communication device 102 and of the third data communication device 103 have subscribed to a service package that does not cover any time-critical application, and that the users of the fourth data communication device 105 and of the fifth data communication device 107 have subscribed to another service package that covers a time-critical application.

The first access network 108 comprises a first sub-network 109 and a second sub-network 111. Each respective one of the first data communication device 102 and the third data communication device 103 has been configured, in advance and based on their respective subscription, to connect to the first sub-network 109 upon accessing the first access network 108. That is, the first sub-network 109 receives a sequence of data packets that have originated at those active ones of the data communication devices in the community 101, whose users have subscribed to service packages without any time-critical application. On the other hand, each respective one of the fourth data communication device 105 and the fifth data communication device 107 has been configured, in advance based on their respective subscription, to connect to the second sub-network 111 upon accessing the first access network 108. The second sub-network 109 receives a sequence of data packets, which have originated at those active ones of the data communication devices in the community 101, whose users have subscribed to service packages that include a time-critical application.

With regard to data packets, sent by the first data communication device 102 or the third data communication device 103, operation of the first sub-network 109 is as follows.

The first sub-network 109 comprises a modifier 115. The modifier 115 is operative to modify the received sequence of data packets by dropping a series of consecutive data packets in bursts so as to produce a modified sequence. The modified sequence does not comprise the data packets dropped. The first sub-network 109 supplies the modified sequence to the Internet 106 via a gateway 117 of the first access network 108.

With regard to data packets, for which the first data communication device 102 and/or the third data communication device 103 is the destination, operation is as follows. The gateway 117 receives from the Internet 106 a sequence of data packets that are addressed to one or more of the data communication devices in the community 101. The gateway 117 may form part of a router (not shown separately here) to control the proper distribution of data packets, received from the Internet, between the first sub-network 109 and the second sub-network 111 based on the destinations of the data packets. In this case, the gateway 117 determines that among the data packets received from the Internet 106 there are data packets that are addressed to the first data communication device 102 and/or the third data communication device 103, as well as data packets that are addressed to the fourth data communication device 105 and/or to the fifth data communication device 107. The gateway 117 then routes the data packets, addressed to the first data communication device 102 and/or the third data communication device 103, to the first sub-network 109. Likewise, the gateway 117 routes the other data packets, addressed to the fourth data communication device 105 and/or to the fifth data communication device 107, to the second sub-network 111. That is, the gateway 117 splits the sequence of data packets received from the Internet 106 into a one sequence of data packets that are supplied to the first sub-network 109, and another sequence of data packets that are supplied to the second sub-network 111.

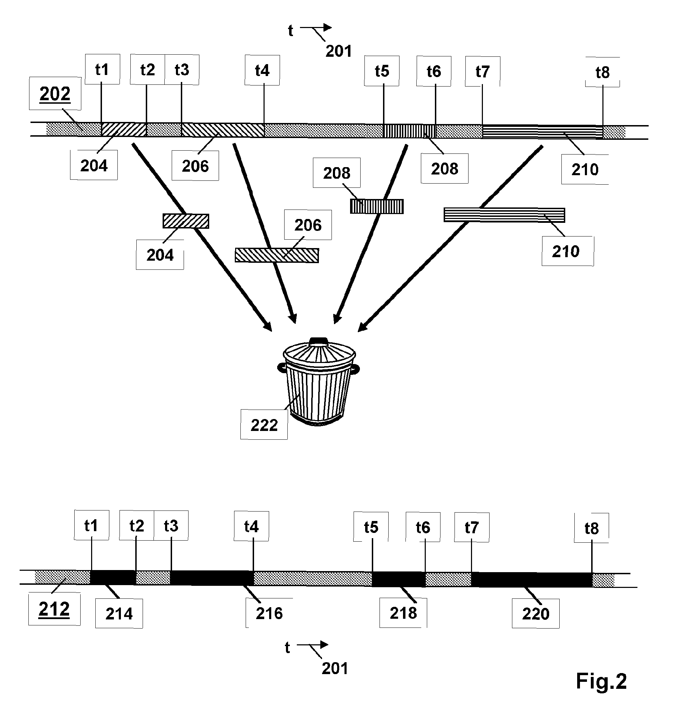

The modifier 115 in the first sub-network 109 receives a sequence of data packets from the gateway 117, and operates on the received sequence by alternately forwarding the data packets to their destinations and dropping a series of one or more consecutive ones of the data packets received from the gateway 117, thus producing the modified sequence of data packets. An example of modifying a sequence of received data packets is discussed below with reference to the diagram of Fig. 2. The first sub-network 109 has a router (not shown here) for receiving the data packets of the modified sequence and for supplying the data packets in the modified sequence to the first data communication device 102 and/or to the third data communication device 103, depending on the individual destination per individual data packet.

With regard to data packets sent by the fourth data communication device 105 or the fifth data communication device 107, operation is as follows. The second sub-network 111 receives a sequence of data packets from one or more active ones of the data communication devices in the community 101, whose users have subscribed to a service package that includes one or more time-critical applications. The sequence of data packets received by the second sub-network 11 from the community 101 comprises data packets sent by the fourth data communication device 105 and/or data packets sent by the fifth data communication device 107. The second sub-network 111 then supplies the data packets to the Internet 106 via the gateway 117, or to the first access network 108.

With regard to data packets, received at the gateway 117 from the Internet 106, for which the fourth data communication device 105 and/or the fifth data communication device 107 are the destination, operation is as follows. The gateway 117 receives from the Internet 106 data packets that are addressed to one or more of the data communication devices in the community 101. In this case, the gateway 117 determines that the data packets are addressed to the fourth data communication device 105 and/or the fifth data communication device 107. The gateway 117 then routes these data packets to the second sub-network 111, from where the data packets are routed to the fourth data communication device 105 and/or the fifth data communication device 107. Accordingly, data packets that originate at, or which are addressed to, the fourth data communication device or the fifth data communication device 107, are routed via the second sub-network 111 and are not subjected in the second sub-network 111 to the controlled removal of data packets.

For data packets that are received at the gateway 117 from the Internet 106 and that are addressed to the first data communication device 102 and to the fifth data communication device 107, operation is as follows. The gateway 117 transfers a first copy of these data packets to the first sub-network 109 for being routed to the first data communication device 102, and transfers a second copy of the data packets to the second sub-network 111 for being routed to the fifth data communication device 107. The first sub-network 109 removes multiple series of consecutive ones of the data packets in bursts, whereas the second sub-network 111 passes on each of the data packets received.

For completeness, consider data communication between the first data communication device 102 and the fifth data communication device 107. The subscriber associated with the first data communication device 102 is not entitled to using time-critical data communication applications, whereas the subscriber associated with the fifth data communication device 107 is entitled to time-critical data communication applications. The data communication between the first data communication device 102 and the fifth data communication device 107 may then be handled within the first access network 108, by means of a connection 119 between the first sub-network 109 and the second sub-network 111. In this way, the first sub-network 109 is enabled to operate on the sequence of data packets communicated between, on the one hand, data communication devices in the community 101, whose users have subscribed to a service package with one or more time-critical applications and, on the other hand, other data communication devices, whose users have not subscribed to such a service package.

Instead of subjecting all data communication from, or to, the first data communication device 102 and the third data communication device 103 to the modifying operation executed by the modifier 115, the first access network 108 may be configured to selectively connect the first data communication device 102 and the third data communication device 103 to the first sub-network 109 for data communication using one or more pre-defined ports. For example, VoIP typically uses UDP. The access network 108 may then be configured to route all data from or to the first data communication device 102 and the third data communication device 103 via the second data network 111, except the data that is communicated via the UDP ports of the first data communication device 102 and the third data communication device 103. This approach reduces the workload on the modifier 115. Accordingly, the first access network 108 may then comprise a discriminating router (not shown) between, on the one hand, the community 101 and, on the other hand, the first sub-network 109 and the second sub-network 111 to selectively route the data from or to the pre-defined ports of the first data communication device 102 and the third data communication device 103 via the first sub-network 109.

For completeness, it is remarked here that the first sub-network 109 and the second sub-network 111 may be implemented as different physical sub-networks or as different virtual networks. As known, a virtual network is a computer network that is includes, at least in part, virtual network links. A virtual network link is a link that does not consist of a physical (wired or wireless) connection between two computing devices but is implemented using methods of network virtualization. The two most common forms of virtual networks are protocol-based virtual networks and virtual networks that are based on virtual devices. Known examples of a protocol-based virtual network are a Virtual Large Area Network (Virtual LAN, or: VLAN), a Virtual Private Network (VPN) and a Virtual Private LAN Service (VPLS). A known example of a virtual network based on virtual devices is a network that connects virtual machines inside a hypervisor (or: a virtual machine manager (VMM)). In practice, both forms can be used in conjunction.

Fig. 2 is a diagram of a sequence 202 of data packets received by the modifier 115. The sequence 202 is illustrated as a continuous bar for ease of clarity. In reality, there may be temporal gaps in the sequence of consecutive data packets if the data communication usage is not generating data packets continuously. In VoIP applications, for example, the temporal gaps may be a result of e.g., there being short silences in the speech to be converted to VoIP data. The sequence 202 of data packets may contain data packets either originating from, or addressed to, different data communication devices of the community 101, e.g., the first data communication device 102 and the third data communication device 103. The sequence 202 may contain data packets of different applications, e.g., VoIP, web-browsing, email, Internet-gaming, downloading or uploading a file, etc.

The time "t" runs from left to right as indicated with an arrow 201. A specific location in the sequence 202 relates to a specific moment in time at which a specific data packet of the sequence 202 is received at the modifier 115 of the first sub-network 109.

Consider a first series 204 of one or more successive ones of the data packets of the sequence 202, a second series 206 of one or more successive ones of the data packets of the sequence 202, a third series 208 of one or more successive ones of the data packets of the sequence 202, and a fourth series 210 of one or more successive ones of the data packets of the sequence 202. The first series 204 is received between a first moment t1 and a second moment t2. The second series 206 is received between a third moment t3 and a fourth moment t4. The third series 208 is received between a fifth moment t5 and a sixth moment t6. The fourth series 210 is received between a seventh moment t7 and an eighth moment t8.

In a method of the invention, the sequence 202 is processed as follows for producing a modified sequence 212.

At the first moment t1, the removal of the first series 204 from the sequence 202 is started. The removal is finished at the second moment t2. As a result, a first gap 214 occurs in the modified sequence 212. At the third moment t3, the removal of the second series 206 from the sequence 202 is started. The removal of the second series 206 from the sequence 202 is finished at the fourth moment t4. The modified sequence 212 has a second gap 216 after the second series 204 has been removed. At the fifth moment t5, the removal of the third series 208 from the sequence 202 is started. The removal of the third series 208 from the sequence 202 is finished at the sixth moment t6. The modified sequence 212 has a third gap 218 after the third series 208 has been removed. At the seventh moment t7, the removal of the fourth series 210 from the sequence 202 is started. The removal of the fourth series 210 from the sequence 202 is finished at the eighth moment t8, leaving a fourth gap 220 in the modified sequence 220. The removal of the first series 203, the second series 206, the third series 208 and the fourth series 210 is symbolized by arrows pointing to a bin 222

Fig.2 illustrates the data processing in the invention by way of an example using the first series 204, the second series 206, the third series 208 and the fourth series 210. Note that the numbers of data packets in the first series 204, in the second series 206, in the third series 208 and in the fourth series 210 may, but need not, be uniform. Also note that the distance in time that separates a pair of successive ones of the first series 204, the second series 206, the third series 208 and the fourth series 210 from each other in the sequence 202, may, but need not be uniform.

Properly choosing the numbers of data packets in the first series 204, in the second series 206, in the third series 208, in the fourth series 210, etc., and/or properly choosing the length of the time period between successive ones of the first series 204, the second series 206, the third series 208, the fourth series 210, etc., will render the quality of the time-critical applications too low to be of practical use. Some numerical examples will be given further below.

The tiered service plan may provide service packages that conditionally allow the use of time-critical applications. For example, a specific service package may conditionally apply a method of the invention in dependence on, e.g., the time of the day, the number of data communication sessions involving the particular subscriber and held within a certain time frame, the geographic location of the subscriber (relevant to mobile data communication equipment), an identity of another party involved in the data communication session with the subscriber, etc. As to the identity of the other party, a scenario is feasible, wherein the subscriber is allowed to make VoIP telephony calls only to one or more predetermined parties and to receive VoIP telephony calls from the same or other one or more predetermined parties. A specific one of the predetermined parties or a specific one of the other predetermined parties are identified based on the destination identifier or the source identifier in a header of the VoIP data packet. Accordingly, specific conditions can be taken into account to determine whether or not to subject data packets to or from a specific subscriber to the method of the invention. That is, the specific conditions determine whether or not these data packets are routed via the first sub-network 109 or via the second sub-network 111.

The number of data packets per individual series to be removed from the sequence can be taken as uniform for a plurality of series in succession, or can be made to vary from one of the series to the next one. For example, the fourth series 210 is illustrated in the diagram of Fig.2 as comprising a higher number of consecutive data packets than the first series 204. Varying the number of data packets per series may give rise to distortions of a less predictable character than if the number were uniform for the all series. The start of the removal operations can be timed to occur at a constant rate or at a varying rate. For example, the length of the time period between the first moment t1 and the third moment t3 is different from the length of the other time period between the third moment t3 and the fifth moment t4. As a result, the occurrences of the distortions are less predictable than if the difference in start times of a pair of subsequent removal operations is kept constant during the process. Predictability may contribute to have the users adjust the data communication to the predictable occurrences of the distortions. For example, if a VoIP data communication usage were affected via a method according to the invention by means of creating a distortion every 3 seconds as a result of deliberately adding jitter, one may time one's speech so that the start and the length of the next distortion coincide with the communication of non-information or of a silence.

The impact of the succession of removal operations on the quality of a time-critical data communication service (VoIP, video streaming, audio streaming, or gaming) depends on the number of consecutive data packets removed from the sequence 202 per removal operation, on the number of removal operations per unit of time, and on the total number of data packets that are received by the modifier 115 per unit of time (i.e., the bandwidth used in the first sub-network 109 to serve the community 101). Remember that the sequence 202 comprises data packets communicated either to, or from, one or more of the data communication devices, whose users have not subscribed to a service package that allows time-critical applications, here: the first data communication device 102 and the third data communication device 103. Also remember that the data packets may stem from different applications such as VoIP, video streaming, audio streaming, web-browsing, sending or receiving an email, downloading or uploading a file, etc., all being active within the same time period.

Consider, for example, a VoIP data communication application as an example of a time-critical data communication service. As mentioned earlier above, the payload of a single VoIP data packet depends on the codec being used. Typically, a VoIP codec produces VoIP data packets with a payload equivalent to a length of speech of typically 20 msec. See, e.g., "Voice Over IP - Per Call Bandwidth Consumption" Document ID 7934, Cisco Systems, Inc., Feb 2006. The loss of VoIP data packets causes skips and voice clipping at the receiving party. If only a single, isolated VoIP data packet of a particular VoIP data communication session, is removed from the sequence 202 per cycle, 20 msec of speech is suddenly absent from the communication as heard by the receiving party. Speech, however, is quite predictive. If the loss of a single VoIP data packet is isolated, the receiving party may still well be able to interpret the voice communication correctly. Alternatively, the VoIP software application of the receiving party runs an algorithm for packet loss concealment (PLC) in order to mask the effects of lost, or discarded, VoIP data packets. The implementation of the PLC algorithm depends on the type of VoIP codec used. A simple algorithm, used by waveform codecs such as G.711, is to replay the last received voice sample with increasing attenuation at each repeat. Owing to the predictability of speech, the waveform does not change much from one sample to the next. This technique can be effective at concealing the loss of up to 20 ms of voice samples, i.e., a single VoIP data packet. If, however, the loss of VoIP data packets occurs in bursts in the particular VoIP data communication session, i.e., if the lost VoIP data packets represents a series of consecutive VoIP data packets from the same person speaking, the packet loss cannot be effectively masked anymore by using a PLC algorithm. Accordingly, the duration of speech represented by the accumulated payload of a series of consecutive VoIP data packets of a single VoIP session that is removed according to the invention preferably has a minimum length of, say, 40 msec. This minimum length of 40 msec corresponds to two consecutive VoIP data packets of the same communication session, with a payload of 20 msec each. However, removal of a series of consecutive VoIP data packets that represents a length of speech of, say, at least a few seconds of a single VoIP session, may still render the VoIP communication between the user of the first data communication device 102 and the other user of the second data communication device 104 usable if the speaker is asked to repeat what he/she was saying when the distortion occurred as perceived by the listener. Accordingly, the duration of speech, represented by the accumulated payload of a series of consecutive VoIP data packets of a single VoIP data communication session, that is removed according to the invention has a maximum length of, say, half a second or one tenth of a second. A maximum length of half a second corresponds to 25 consecutive VoIP data packets with a payload of 20 msec each. A maximum length of one tenth of a second corresponds to 5 consecutive VoIP data packets with a payload of 20 msec each.

In the invention, the consecutive data packets in the sequence 202 received by the first sub-network 109 (either from the community 101 or from the gateway 117) are removed from the sequence 202 in bursts. The removal of each individual one of the first series 204, the second series 206, the third series 208 and the fourth series 210, represents such a burst. Consider a length of the time interval between two successive ones of such removal operations. Clearly, running a removal operation once every 20 seconds on the sequence 202 that contains among the data packets specific data packets of a single VoIP session, is not going to render this VoIP communication unusable. The parties communicating over VoIP will encounter an anomaly once every 20 second in the speech as rendered. If the distance in time between two successive bursts is taken in the order of, for example, 100 msec, that is, if the number of bursts is in the order of 10 per second, the speech received by the receiving party in his/her VoIP application is rendered completely unintelligible.

More generally, assume that a specific time-critical application requires that a certain number of K data packets be communicated per second in order to maintain the quality of service at an adequate level. That is, assume that among all data packets received per second at the modifier 115 in the sequence 202 from the community 101, or from the gateway 117, there are at least K data packets belonging to a specific time-critical application involving, e.g., the first data communication device 102. Further assume that the loss of a number of data packets in the specific time-critical application causes a disturbing artifact in the rendering of the data packets of the specific time-critical application, if this number of lost data packets equals at least a number M. For example, a number ofK = 50 VoIP data packets need to be transmitted per second in order to deliver the bitrate of a G.711 VoIP codec. See, e.g., "Voice Over IP - Per Call Bandwidth Consumption" Document ID 7934, Cisco Systems, Inc., Feb 2006, mentioned above. The loss of a number of M consecutive data packets in the VoIP data communication usage causes a disturbing artifact at the receiving end, if the number M is at least 2.

Consider now all data packets of the sequence 202 that are received at the modifier 115 in the time interval between a time "t" and a time "t + δT". On the average, of all these data packets, a number of δT × K will be data packets of the specific time-critical application involving the first data communication device 102. In order to catch, on the average, at least a number of M consecutive data packets belonging to this specific time-critical application, δT will need to be in the order of M/K or longer. In case the specific time-critical application is VoIP using a G.711 codec, the value ofK equals 50 and the value M is at least 2, so that δT needs to be in the order of 0.04 sec or longer. Accordingly, if all data packets are removed from the sequence 202 that are received by the modifier 115 during a time interval of at least M/K second, there will be, on the average, at least M consecutive data packets of the specific time-critical application involving the first communication device 102, among the total number of data packets removed.

Consider further that the consecutive data packets in the sequence 202 are supplied to the modifier 115 (either by the community 101 or by the gateway 117) at a rate that is equal to a number of A data packets per second. That is, the sequence received at the modifier 115 currently uses a bandwidth of a number of A data packets per second. Consider now that per burst a number of data packets are removed in the order of A·δT = A·M/K. Consider a first type of time-critical application, for which the parameter K has the value K₁ and the parameter M has a value M₁ Consider a second type of time-critical application, for which the parameter K has the value K₂ and the parameter M has a value M₂. Then, a disturbing artifact is generated in all ongoing time-critical applications of the first type for all unauthorized subscribers, as a result of removing a series of at least A·M₁/K₁ consecutive data packets from the sequence 202. Likewise, a disturbing artifact is generated in all ongoing time-critical applications of the second type for all unauthorized subscribers, as a result of removing at least A·M₂/K₂ consecutive data packets from the sequence 202. Assume that the number A·M₁/K₁ is higher than number A·M₂/K₂. Then, if a series of at least A·M₁/K₁ consecutive data packets are removed from the sequence 202, a disturbing artifact is created in both the time-critical application of the first type and the time-critical application of the second type.

The number of removal operations per second determines the number of artifacts generated per second which, in turn, determines the quality of service. In order to render the quality of the time-critical application of the first type unacceptably low, a number in the order of at least R₁ artifacts are needed per second. Likewise, in order to render the quality of the time-critical application of the second type unacceptably low, a number in the order of at least R₂ artifacts are needed per second. Let the number R₂ be higher than the number R₁. Then, in order to render the quality of service unacceptably low for all active time-critical applications of the first type, currently represented in the sequence 202, and for all active time-critical application s of the second type, currently represented in the sequence 202, a number in the order of at least R₂ removal operations are needed per second, in each whereof a series of at least A·M₁/K₁ consecutive data packets are removed from the sequence 202.

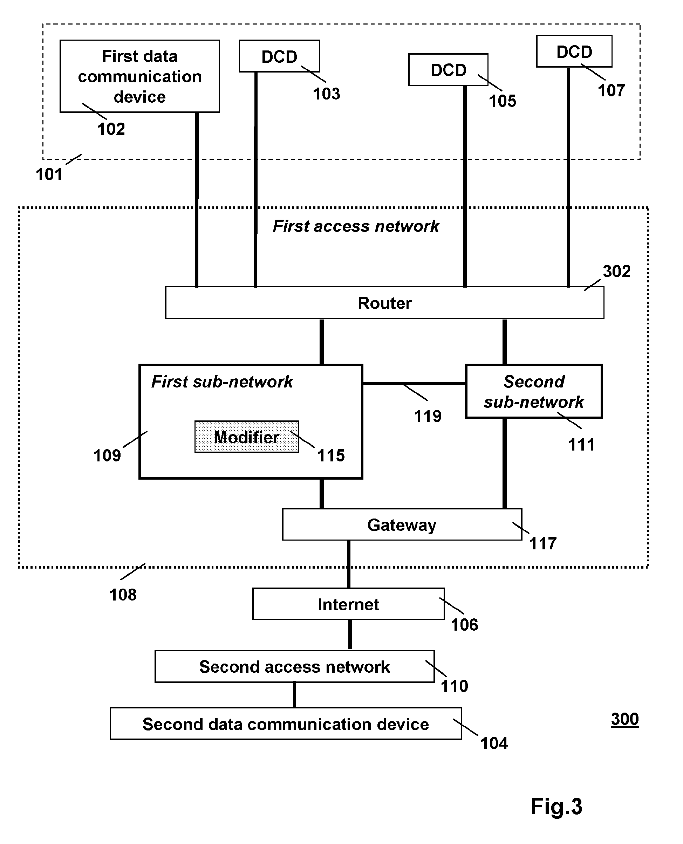

Fig.3 is a diagram of a second embodiment 300 of a system in the invention. A difference between the first embodiment 100 and the second embodiment 300 is that the first access network 108 comprises a router 302 between, on the one hand, the community 101 and, on the other hand, the first sub-network 109 and the second sub-network 111. The router 302 determines to which one of the first sub-network 109 and the second sub-network 111 a data packet is to be routed upon receiving the data packet from the community 101. The router 302 inspects the identifier of the origin of the data packet as listed in the header of the data packet received and consults a routing table (not shown) or a database (not shown) prepared in advance. If, according to the routing table or to the database, the identifier is associated with the first data communication device 102 or with the third data communication device 103, the router 3 02 routes the data packet to the first sub-network 109. If, according to the routing table or to the database, the identifier is associated with the fourth data communication device 105 or with the fifth data communication device 107, the router 302 routes the data packet to the second sub-network 111. Accordingly, the first access network 108 in the second embodiment 300 needs to inspect the header of each data packet received from the community 101. In contrast, each of the first data communication device 102 and the third communication device 103 in the first embodiment 100 is configured to connect to the first sub-network 109 upon accessing the first access network 108, and each of the fourth data communication device 105 and the fifth data communication device 107 in the first embodiment 100 is configured to connect to the second sub-network 111 upon accessing the first access network 108.

## Claims

1. A method of controlling a quality of a service on a data network (106, 108), wherein:
the method comprises receiving a plurality of data packets in a sequence (202);
the plurality of data packets comprises at least one of:
a first plurality of first data packets, respective ones of the first plurality of first data packets being addressed to respective ones of multiple specific destinations; and
a second plurality of second data packets, respective ones of the second plurality of second data packets having been received from respective ones of multiple specific sources;
the method comprises modifying the sequence to produce a modified sequence (212);
the modifying comprises at least one of:
removing from the sequence one or more specific series (204, 206, 208, 210) of one or more consecutive ones of the first data packets; and
removing from the sequence one or more further specific series (204, 206, 208, 210) of one or more consecutive ones of the second data packets; and
the method comprises supplying the modified sequence.

2. Data network equipment (109) configured for controlling a quality of a service on a data network (106, 108), wherein:
the data network equipment comprises an input for receiving a plurality of data packets in a sequence (202);
the plurality of data packets comprises at least one of:
a first plurality of first data packets, respective ones of the first plurality of first data packets being addressed to respective ones of multiple specific destinations; and
a second plurality of second data packets, respective ones of the second plurality of second data packets having been received from respective ones of multiple specific sources;
the data network equipment comprises a modifier (115) operative to modify the sequence to produce a modified sequence (212);
the modifier is configured for at least one of:
removing from the sequence one or more specific series (204, 206, 208, 210) of one or more consecutive ones of the first data packets; and
removing from the sequence one or more further specific series (204, 206, 208, 210) of one or more consecutive ones of the second data packets; and
the data network equipment comprises an output for supplying the modified sequence.

3. Control software, wherein the control software is configured to control data network equipment for controlling a quality of a service on a data network (106, 108), wherein:
the data network equipment comprises an input for receiving a plurality of data packets in a sequence (202);
the plurality of data packets comprises at least one of:
a first plurality of first data packets, respective ones of the first plurality of first data packets being addressed to respective ones of multiple specific destinations; and
a second plurality of second data packets, respective ones of the second plurality of second data packets having been received from respective ones of multiple specific sources;
the control software comprises instructions for modifying the sequence to produce a modified sequence (212);
the instructions comprise at least at least one of:
first instructions for removing from the sequence one or more specific series (204, 206, 208, 210) of one or more consecutive ones of the first data packets; and
second instructions for removing from the sequence one or more further specific series (204, 206, 208, 210) of one or more consecutive ones of the second data packets; and
third instructions for supplying the modified sequence at an output of the data network equipment.
